# EUROPEAN PATENT APPLICATION

(11) **EP 1 531 395 A1**
(43) Date of publication of application: **18.05.2005**
(21) Application number: 03026336.2
(22) Date of filing: 17.11.2003
(51) Int. Cl.: G06F 11/34

(54) **Method of determining information about the processes which run in a program-controlled unit during the execution of a program**

(71) Applicant: Infineon Technologies AG, 81669 München (DE)
(72) Inventor: Mayer, Albrecht, Dr., 82041 Deisenhofen (DE); Siebert, Harry, 82178 Puchheim (DE); Hellwig, Frank, 81827 München (DE)
(74) Representative: Repkow, Ines, Dr. Dipl.-Ing.

(57) **Abstract**

A description is given of a method of determining information about the processes which run in a program-controlled unit during the execution of a program by the program-controlled unit. The method described is distinguished by the fact that identical items of individual information about processes of the same type are combined to form a single item of overall information. As a result, the desired information about the processes of interest can be procured with considerably less expenditure than was the case hitherto.

## Description

The present invention relates to methods according to the precharacterizing clause of Patent Claim 1, that is to say methods of determining information about the processes which run in a program-controlled unit during the execution of a program by the program-controlled unit.

Program-controlled units are devices which execute programs, such as microprocessors, microcontrollers, signal processors etc.

Modern program-controlled units provide a large number of configuration possibilities, by means of which they can be matched to the individual requirements of the user. These configuration possibilities include, for example, the arbitration of internal buses, the arbitration of accesses to memory interfaces, the definition of address maps, the definition of interrupt priorities, etc. In order to be able to configure a program-controlled unit optimally for a respective requirement, information is needed about the processes which run in a program-controlled unit during the execution of a program by the program-controlled unit.

The information whose acquisition may be of interest to the user or developer of the program-controlled unit or of a program to be executed by the program-controlled unit includes, inter alia
- information as to which parts of the program to be executed are executed during the execution of the program, and which parts of the program to be executed are not executed during the execution of the program, and
- information as to how long the program-controlled unit is occupied with the execution of which commands.

The information mentioned at the first point may be procured, for example, by means of what is known as a code-coverage determination, and the information mentioned at the second point can be procured, for example, by what is known as a code-profiling determination.

In the case of a code-coverage determination, the procedure in the simplest case can be such that commands are inserted into the program to be executed by the program-controlled unit, the execution of which commands effects the storage or the output of information, by using which it is possible to determine whether the part of the program containing the additional commands has been executed or not. Such a simple method can, however, be used only in systems which do not constitute real-time systems.

In the case of real-time systems, the additional commands would lead to the system behaving differently than would be the case without these commands, so that no reliable information about the behaviour of the system to be examined can be obtained by such a code-coverage determination.

The code-coverage determination in real-time systems can be carried out, for example, by the values of the instruction pointer managed and used by the core of the program-controlled unit being registered and
- either all the registered instruction pointer values being stored and subsequently evaluated (alternative 1),
- or storage elements assigned to the possible instruction pointer values being provided and, each time the instruction pointer changes, the storage element associated with the respective instruction pointer value being set to a predefined value (alternative 2),
- in the case of alternative 1, trace data containing the instruction pointer normally being produced, output from the program-controlled unit and stored outside the program-controlled unit, and
- in the case of alternative 2, logic for evaluating the instruction pointer values and for writing to the storage elements associated with the relevant values and likewise provided in the program-controlled unit normally being provided in the program-controlled unit.

It should be obvious and requires no further explanation that both the practical implementation of alternative 1 and the practical implementation of alternative 2 entail considerable expenditure, the expenditure rising with increasing magnitude of the clock frequency of the program-controlled unit and, at very high clock frequencies (from about 120 MHz), becoming so high that it no longer bears a sensible relationship with the benefit that can be achieved thereby.

A code-profiling determination in real-time systems is similarly expensive. For this purpose, specific commands or command sequences are usually assigned counters, which count the clock cycles of a clock signal supplied to them at a constant clock frequency and which are started at the start of the execution of the commands or command sequences assigned to them and stopped at the end of the execution of the commands or command sequences assigned to them. This likewise entails enormous expenditure, in particular when the code-profiling determination is to be carried out for a large number of commands or command sequences.

The present invention is therefore based on the object of developing the method according to the precharacterizing clause of Patent Claim 1 in such a way that the desired information may be determined with little expenditure.

According to the invention, this object is achieved by the method claimed in Patent Claim 1.

The method according to the invention is distinguished by the fact that identical individual items of information about processes of the same type are combined to form a single item of overall information.

As a result, the desired information may be determined and stored with considerably less expenditure.

Advantageous developments of the invention can be gathered from the subclaims, the following description and the figures.

The invention will be explained in more detail below using exemplary embodiments and with reference to the figures, in which:
- Figure 1: shows the structure of a program-controlled unit, having a determination unit for determining information about the processes which proceed in the program-controlled unit during the execution of a program by the program-controlled unit, and
- Figure 2: shows the structure of the determination unit of the program-controlled unit according to Figure 1.

For completeness, it should already be mentioned at this point that, in the present case, only the constituent parts of the program-controlled unit which are of particular interest here are shown and described.

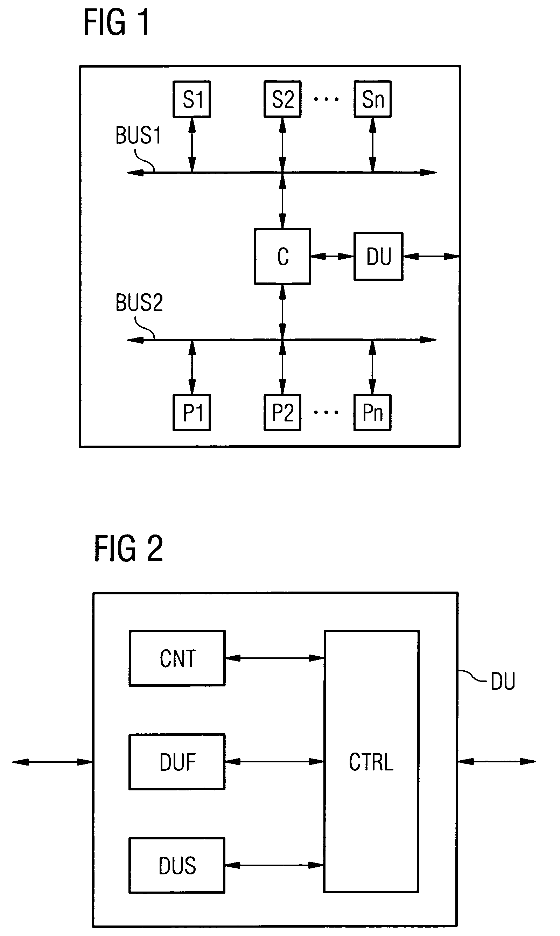

The program-controlled unit shown in Figure 1 is a microcontroller. However, the invention can also be employed in any other desired program-controlled units, for example in microprocessors or signal processors.

The microcontroller shown contains a core C, memory devices S1 to Sn connected to the core C via a first bus BUS1, peripheral units P1 to Pn connected to the core C via a second bus BUS2, and a determination unit DU connected to the core C.

The core C reads out a program stored in the microcontroller (for example one in one of the memory devices S1 to Sn) or a program stored outside the microcontroller and executes it.

The memory devices S1 to Sn can be formed by a RAM, a ROM, a flash memory and/or any other desired memories for storing data and/or programs.

The peripheral units P1 to Pn can be formed, for example, by a timer, an analogue/digital converter, a digital/analogue converter, a DMA controller and/or any other desired devices.

The determination unit DU in the example considered is a constituent part of an on-chip debug support or OCDS module. Of course, however, it could also be a constituent part of any another desired microcontroller component, or a separate microcontroller component without further functions.

The structure of the determination unit DU is illustrated in Figure 2. It contains a counter CNT, a memory device DUS, and a control device CTRL. Moreover, the determination unit DU can (but does not have to) contain an intermediate store DUF formed by a FIFO, for example. The aforementioned components are at least partly formed by components which are present in the OCDS module from the start, that is to say by components which are also present in conventional OCDS modules.

As will be explained in more detail in the following text, the determination unit DU presented here can determine a large number of extremely different items of information. Accordingly, the determination unit DU can also contain further or other components.

The determination unit DU is connected to the core C and (via one or more input and/or output terminals of the microcontroller) to a control device provided outside the microcontroller.

The determination unit DU obtains specific internal data and/or signals supplied by the core C, and, predefined by the external control device, which operations it has to execute.

The determination unit DU is a unit for determining information about the processes which run in the microcontroller during the execution of the program executed by the microcontroller. The determination unit DU combines identical individual items of information about processes of the same type to form a single item of overall information.

"Identical individual items of information" is to be understood to mean information which represents the same property of the respective processes, that is to say, for example
- information about the fact that a process of interest has occurred, or
- information about the respective duration of the processes of interest, or
- information about commands executed, for example their instruction pointer values, or
- information about memory accesses by the core, for example the addresses to which the respective accesses are made,
etc.

In the example considered, the item of overall information represents the sum of the individual items of information about selected or all processes, or the difference between individual items of information about selected processes, but could also be formed by any other desired arithmetic and/or logic operations. The item of overall information thus represents, for example
- the number of processes of interest which have occurred, for example the number of cache misses, or
- the total duration of the processes of interest, for example the total time needed for the execution of a plurality of commands, or
- the difference between the instruction pointer values of specific commands (for example for determining the further commands executed between the specific commands),
etc.

The item of overall information in the example considered is in each case formed taking account exclusively of individual items of information about processes which occur during the execution of a program part executed between two successive branches. This proves to be particularly advantageous if an item of overall information formed in this way firstly represents an item of always much more detailed information about the processes proceeding in the microcontroller and secondly can be produced and stored with substantially less expenditure than the individual items of information combined to form the item of overall information. Furthermore, the occurrence of branches can be determined particularly simply. In particular, it is not necessary for this purpose for the determination unit DU to receive and process all the instruction pointer values supplied by the core C. It is sufficient if the determination unit DU is supplied only with specific instruction pointer values or only specific items of information about the instruction pointer values, such as information about their variation over time. More precisely, in most cases it is sufficient if the determination unit DU is supplied with only those instruction pointer values or only those items of information about the instruction pointer values using which the branches that have occurred during the program execution and a branch source address, described in more detail later, and/or a branch target address, likewise described in more detail later, can be detected or determined.

However, the item of overall information can be obtained by taking account exclusively of individual items of information about processes which satisfy a further condition or other conditions, for example
- taking account exclusively of individual items of information about the processes running during the execution of a specific command type (for example during the execution of mov commands), or
- taking account exclusively of individual items of information about processes which occur during the execution of commands whose instruction pointers have values predefined by the user, or
- taking account exclusively of individual items of information about processes which occur during the execution of commands by means of which data are read from a specific storage area or by means of which data are written into a specific storage area.

For completeness, it should be noted that a branch is an event at which non-sequential processing of the program to be executed by the microcontroller is carried out. A branch can be caused by commands contained in the program to be executed, for example as a result of conditional or unconditional jump commands, subroutine calls, return commands, program loop commands, reset commands, etc. However, a branch can also be caused by particular events inside or outside the microcontroller, for example by an interrupt request.

The occurrence of a branch is detected in the example considered by using appropriate control signals which are supplied to the determination unit DU by the core C.

However, the occurrence of a branch could also be detected by using the variation in the instruction pointer managed and used by the core C belonging to the microcontroller. If and as long as the value of the instruction pointer rises in specific steps, sequential processing of the program to be executed by the microcontroller is taking place, and there is no branch. Otherwise, more precisely in the event of a jump in the instruction pointer value, there is non-sequential processing of the program to be executed by the microcontroller, that is to say a branch. As already mentioned above, it is not necessary for all the instruction pointer values to be supplied to the determination unit DU for this purpose. It is sufficient if the determination unit DU is supplied only specific instruction pointer values or only selected items of information about the instruction pointer values, for example items of information about their variation over time (for example in a manner which is the case in the known Nexus interface for the output of trace data from program-controlled units).

Moreover, the determination unit DU determines the branch source address and/or the branch target address for each branch, the instruction pointer value of the last command before the respective branch being used as the branch source address, and the first command after the respective branch being used as the branch target address.

In the example considered, the determination unit DU
- is able to carry out a code-coverage determination, and/or
- is able to carry out a code-profiling determination, and/or
- is able to determine to which data-storing parts of memory devices present inside or outside the microcontroller access is made, during the execution of the program executed by the microcontroller, by the core, a DMA controller or any other component belonging to the microcontroller, that is to say to carry out a data-coverage determination, and/or
- is able to determine how long the accesses to the data-storing parts of memory devices present inside or outside the microcontroller in each case last overall, that is to say to carry out a data-profiling determination, and/or
- is able to determine the number of successful accesses carried out, during the execution of the program executed by the microcontroller, to an instruction cache contained in the microcontroller and/or the number of successful accesses to a data cache contained in the microcontroller, that is to say the number of instruction cache hits and/or the number of data cache hits, and/or
- is able to determine the number of unsuccessful accesses taking place, during the execution of the program executed by the microcontroller, to an instruction cache contained in the microcontroller and/or the number of unsuccessful accesses to a data cache contained in the microcontroller, that is to say the number of instruction cache misses and/or the number of data cache misses, and/or
- is able to determine the number of program interruptions taking place, during the execution of the program executed by the microcontroller, caused by exceptions such as interrupts or the like, and/or
- is able to determine the latency times following the occurrence of an instruction cache miss or following the occurrence of a data cache miss,
its not being necessary for any of the determinations that the program executed by the microcontroller contain additional commands which carry out or assist the determination.

It should be clear and require no further explanation that the determination unit DU can also determine and store any other desired information about processes which occur during the execution of the program between the first branch and a following second branch.

If a code-coverage determination is to be carried out by the determination unit DU, the external control device notifies the determination unit DU of this by means of transmitting appropriate control information.

The determination unit DU then monitors whether a branch occurs during the execution of the program just being executed by the microcontroller, more precisely by its core. If the determination unit DU detects the execution of a branch, it determines the branch target address of this first branch and temporarily stores this internally. The determination unit DU then monitors the occurrence of a second branch following the first branch. When the determination unit DU detects the occurrence of a second branch, it determines the branch source address from this second branch. It then forms the difference between the branch target address of the first branch and the branch source address of the second branch and writes this difference into a memory designated the code-coverage memory below, at an address assigned to the branch source address of the second branch.

In the example considered, the memory device DUS is used as the code-coverage memory. However, any other desired memory belonging to the determination unit DU or the microcontroller component containing the latter, or any other desired internal memory belonging to the microcontroller, or a memory provided outside the microcontroller could also be used as the code-coverage memory.

Writing the difference into the code-coverage memory is preferably carried out only when the value which is stored in the code-coverage memory at the address assigned to the branch source address of the second branch is smaller than the difference determined. Otherwise, that is to say when the value which is stored in the code-coverage memory at the address assigned to the branch source address of the second branch is not smaller than the difference determined, the difference is not written into the code-coverage memory. The check to see whether or not the value which is stored in the code-coverage memory at the address assigned to the branch source address of the second branch is smaller than the difference determined is carried out in that the determination unit DU, before writing the difference into the code-coverage memory, reads the value which is stored in the code-coverage memory at the address assigned to the branch source address of the second branch, and compares this value with the difference determined.

The difference determined could also be written into the code-coverage memory at an address assigned to the branch target address of the first branch. In this case,
- a check would be made to see whether the value which is stored in the code-coverage memory at the address assigned to the branch target address of the first branch is smaller than the difference determined, and
- the difference would be written into the code-coverage memory only when the difference determined is greater.

It can prove to be advantageous if the calculation of the difference and writing the difference into the code-coverage memory are not carried out either when a pass through a program loop has just been carried out another time. For example, provision can be made for no calculation of the difference and no writing of the difference into the code-coverage memory to take place when the branch source address of the second branch is equal to the branch source address of the first branch and, at the same time, the branch target address of the second branch is equal to the branch target address of the first branch.

It can also prove to be advantageous if the differences to be written into the code-coverage memory are not written immediately into the code-coverage memory but are first stored temporarily in the FIFO DUS together with the branch source address of the second branch and the branch target address of the first branch, or together with the address at which the differences are to be written into the code-coverage memory. In this case, the check to see whether the difference is to be written into the code-coverage memory at all and/or writing the difference into the code-coverage memory can be carried out at a later time. This proves to be advantageous in particular when the branches follow one another transiently at very short time intervals.

In order to prevent information being lost on account of an inadequately large FIFO, a device designated the FIFO overflow counter below can be provided in the determination unit, which device produces data using which, during the subsequent evaluation of the information obtained by the code-coverage determination, it is possible to detect whether and, if appropriate, to what extent the code-coverage determination is or could be incomplete. The FIFO overflow counter used can be, for example, an adding device implemented in hardware, which adds up the differences which cannot be stored and processed further in the FIFO because of a lack of free storage locations in the FIFO, or which counts the number of differences which cannot be stored and processed further in the FIFO because of a lack of free storage locations in the FIFO.

The determination unit DU also determines the branch target address of the second branch and then monitors the occurrence of a third branch following the second branch. If the determination unit DU detects the occurrence of a third branch, it determines the branch source address from this third branch. It then forms the difference between the branch target address of the second branch and the branch source address of the third branch and writes this difference into the code-coverage memory at an address assigned to the branch source address of the third branch or at an address assigned to the branch target address of the second branch. In this case, the procedure is exactly the same as in the determination and storage described above of the difference between the branch target address of the first branch and the branch source address of the second branch; the second branch is treated in the same way as the first branch, and the third branch is treated in the same way as the second branch.

In the same way, the difference between the branch target address of the third branch and the branch source address of a fourth branch, the difference between the branch target address of the fourth branch and the branch source address of a fifth branch, etc. are formed and stored.

The address at which the difference is stored, that is to say the address assigned to the branch target address of the first branch or the address assigned to the branch source address of the second branch, is in each case formed by using a mapping algorithm permanently set in the determination unit DU or predefined to the determination unit DU by the external control device. In the simplest case, this mapping algorithm consists in a specific offset, for example a specific base address, being added to the branch target address of the first branch or to the branch source address of the second branch. It can also prove to be advantageous if the branch target address of the first branch or the branch source address of the second branch, or the sum of this address and the offset, is shifted right by a specific number of bits, so that one or more of the least significant bits fall out of the address. As a result, although the resolution of the code-coverage determination becomes poorer under certain circumstances, one manages with a considerably smaller code-coverage memory for this purpose.

The differences stored in the code-coverage memory are read and evaluated by the external control device following the completion of the code-coverage determination.

If a code-profiling determination is to be carried out by the determination unit DU, the external control device notifies the determination unit DU of this by means of transmitting appropriate control information.

The determination unit DU then monitors whether a branch occurs in the program executed by the microcontroller, more precisely by the core of the same. If the determination unit DU detects the execution of a branch, it resets the counter CNT and starts the latter. The counter CNT counts the clock cycles of a clock signal at a constant and known frequency, so that the counter reading is a value which represents the time which has elapsed since the last branch. While the counter counts, the determination unit DU monitors the occurrence of a second branch following the first branch. If the determination unit DU detects the occurrence of a second branch,
- it stops the counter,
- reads the counter reading from the counter CNT,
- from a memory designated the code-profiling memory below, it reads the value which is stored at the address assigned to the branch source address of the second branch,
- forms the sum of the value read from the code-profiling memory and the counter reading read from the counter CNT, and
- writes the sum into the code-profiling memory at the address assigned to the branch source address of the second branch.

In the example considered, the memory device DUS is used as the code-profiling memory. However, any other desired memory belonging to the determination unit DU or the microcontroller component containing the latter, or any other desired internal memory belonging to the microcontroller, or a memory provided outside the microcontroller, could also be used as the code-profiling memory.

Before the sum is written into the code-profiling memory, a check is preferably made to see whether the sum is greater than the maximum value which can be stored in the code-profiling memory. If, during this check, it transpires that the sum is not greater than the maximum value which can be stored in the code-profiling memory, the sum is written into the code-profiling memory. Otherwise, that is to say if the sum is greater than the maximum value which can be stored in the code-profiling memory, another predetermined value is written into the code-profiling memory, this other predetermined value preferably being the maximum value which can be stored in the code-profiling memory.

The sum determined could also be written into the code-profiling memory at an address assigned to the branch target address of the first branch. In this case, the sum of the value which is stored in the code-profiling memory at the address assigned to the branch target address of the first branch, and of the counter reading read from the counter CNT, and writing this sum into the code-profiling memory, would be carried out only if the sum is not greater than the maximum value which can be stored in the code-profiling memory.

It can prove to be advantageous if the actions mentioned above, which are to be carried out upon the occurrence of the second branch, are not carried out if a pass through the same program loop, which is subsequently executed again, has just been executed. For example, provision can be made for the aforementioned actions not to be carried out if the branch source address of the second branch is equal to the branch source address of the first branch and, at the same time, the branch target address of the second branch is equal to the branch target address of the first branch. In this case, the counter would be allowed to continue to count, and stopping the counter and reading and further processing the counter reading would be carried out only when or after the program loop is left, more precisely upon the occurrence of the branch following the last pass through the loop.

Furthermore, it can also prove to be advantageous if reading the value from the code-profiling memory, to which the counter reading of the counter is to be added, and forming the sum and writing the sum back into the code-profiling memory, are not carried out immediately but instead, initially only the counter reading of the counter CNT is stored temporarily in the FIFO DUF, together with the branch source address of the second branch and the branch target address of the first branch, or together with the address at which the sum is to be stored in the code-profiling memory. In this case, reading the value from the code-profiling memory to which the counter reading from the counter is to be added, and forming the sum and writing the sum back into the code-profiling memory, can be carried out at a later time. This proves to be advantageous in particular if the branches follow one another transiently at particularly short time intervals.

In order to prevent information being lost on account of an inadequately large FIFO, a device designated the FIFO overflow counter below can be provided in the determination unit, which device produces data using which, during the subsequent evaluation of the information obtained by the code-profiling determination, it is possible to detect whether and, if appropriate, to what extent the code-profiling determination is or could be incomplete. The FIFO overflow counter used can be, for example, an adding device implemented in hardware, which adds up the counter readings which cannot be stored and processed further in the FIFO because of a lack of free storage locations in the FIFO, or which counts the number of counter readings which cannot be stored and processed further in the FIFO because of a lack of free storage locations in the FIFO.

Immediately after the determination unit DU has read the counter reading from the counter CNT upon the occurrence of the second branch, it resets the counter CNT, starts the counter CNT again and monitors the occurrence of a third branch following the second branch. If the determination unit DU registers the occurrence of a third branch,
- it stops the counter,
- reads the counter reading from the counter CNT,
- reads from the code-profiling memory the value which is stored at an address assigned to the branch source address of the third branch,
- forms the sum of the value read from the code-profiling memory and the counter reading read from the counter CNT, and
- writes the sum into the code-profiling memory at the address assigned to the branch source address of the third branch.

That is to say, the second branch is treated in the same way as the first branch, and the third branch is treated in the same way as the second branch.

The procedure is the same upon the occurrence of further branches.

The address at which the difference is stored in each case, that is to say the address assigned to the branch target address of the first branch or the address assigned to the branch source address of the second branch, is in each case formed by using a mapping algorithm permanently set in the determination unit DU or predefined to the determination unit DU by the external control device. In the simplest case, this mapping algorithm consists in a specific offset, for example a specific base address, being added to the branch target address of the first branch or to the branch source address of the second branch. It can also prove to be advantageous if the branch target address of the first branch or the branch source address of the second branch, or the sum of this address and the offset, is shifted right by a specific number of bits, so that one or more of the least significant bits fall out of the address. As a result, although the resolution of the code-profiling determination becomes poorer under certain circumstances, one manages with a considerably smaller code-profiling memory for this purpose.

The sums stored in the code-profiling memory are read and evaluated by the external control device following the completion of the code-profiling determination.

If a data-coverage determination is to be carried out by the determination unit DU, the external control device notifies the determination unit DU of this by means of transmitting appropriate control information.

The external control device preferably further notifies the determination unit DU of the memory ranges for which the data-coverage determination is to be carried out, by transmitting appropriate addresses or address ranges.

The determination unit DU then monitors whether a read access or a write access to the memory range or the memory ranges for which the data-coverage determination is to be carried out is made by the core, a DMA controller or another microcontroller component. This monitoring is carried out by evaluating the addresses using which access is made to the existing internal and external memories.

The addresses to be evaluated
- are supplied to the determination unit DU by the core, an OCDS module and/or another component belonging to the microcontroller, and/or
- are determined by the determination unit DU itself,
it being possible for the latter to be done
- by the determination unit DU being connected to the bus or the buses via which the existing internal and external memory devices are accessed, and
- by the determination unit DU registering the addresses transmitted via these buses.

If required, control signals additionally transmitted via the buses, for example handshake signals transmitted between the memory and the microcontroller component accessing the memory, can be registered and evaluated.

If the determination unit DU establishes that a read or write access is made to an address, designated the data memory access address below, which lies within the memory range for which the data-coverage determination is to be carried out, the determination unit DU writes a specific item of data, for example a "1", into a memory designated the data-coverage memory below, at an address assigned to this address.

In the example considered, the memory device DUS is used as the data-coverage memory. However, any other desired memory belonging to the determination unit DU or the microcontroller component containing the latter, or any other desired internal memory belonging to the microcontroller, or a memory provided outside the microcontroller, could also be used as the data-coverage memory.

In a similar way to that in the code-coverage determination, provision can also be made here for the data to be written into the data-coverage memory initially to be stored temporarily in the FIFO DUF, together with the data memory access address, or together with the address at which the respective data are stored in the data-coverage memory, and only later written into the data-coverage memory.

In order to prevent information being lost on account of an inadequately large FIFO, use can also be made here of the FIFO overflow counter already mentioned above.

After the determination unit DU has registered the end of an access to the memory range or the memory ranges for which the data-coverage determination is to be carried out, it monitors the occurrence of a next read access or a next write access to the memory range or the memory ranges for which the data-coverage determination is to be carried out, in this case the processes described above being repeated.

The address at which the data to be written into the data-coverage memory are to be stored in each case is respectively formed by using a mapping algorithm permanently set in the determination unit DU or a mapping algorithm predefined to the determination unit DU by the external control device. In the simplest case, this mapping algorithm consists in a specific offset, for example a specific base address, being added to the data memory access address. It can prove to be advantageous if the data memory access address or the sum of the data memory access address and the offset is shifted right by a specific number of bits, so that one or more of the least significant bits fall out of the address. As a result, one manages with a considerably smaller data-coverage memory. Additionally or alternatively, in particular when a data-coverage determination is to be carried out for a plurality of memory ranges not located directly beside one another in the address space, it can prove advantageous if a mapping algorithm that depends on the data memory access address is used. In particular, it can prove to be advantageous if use is made of a mapping algorithm by means of which the data memory access addresses are assigned addresses which are located directly beside one another (without gaps) in the address space. In this way, the data-coverage memory can be used optimally, more precisely without gaps, so that one manages with a relatively small data-coverage memory.

The data stored in the data-coverage memory are read and evaluated by the external control device following the completion of the data-coverage determination.

If a data-profiling determination is to be carried out by the determination unit DU, the external control device notifies the determination unit DU of this by means of transmitting appropriate control information.

The external control device preferably also notifies the determination unit DU about the memory ranges for which the data-profiling determination is to be carried out, by means of transmitting appropriate addresses or address ranges.

The determination unit DU then monitors whether a read access or a write access is made, by the core, a DMA controller or another microcontroller component, to the memory range or the memory ranges for which the data-profiling determination is to be carried out. This is done in the same way as has been explained above in explaining the data-coverage determination. In order to detect the start of the read or write access, it can prove to be advantageous if control signals additionally transmitted via the buses, for example handshake signals transmitted between the memory and the microcontroller component accessing the memory, are registered and evaluated.

If the determination unit DU establishes that a read or write access is made to an address, designated the data memory access address below, which lies within the memory range for which the data-profiling determination is to be carried out, more precisely if the determination unit DU establishes that such access has just begun, it resets the counter CNT and starts the latter. The counter CNT then counts the clock cycles of a clock signal at a constant and known frequency, so that the counter reading is a value which represents the time which has elapsed since the start of the memory access just being carried out. While the counter CNT counts, the determination unit DU monitors the occurrence of the end of the relevant memory access. The end of the memory access may be determined, for example, by registering and evaluating the handshake signals which are transmitted between the memory and the microcontroller component accessing the memory. When the determination unit DU detects the end of the memory access,
- it stops the counter CNT,
- reads the counter reading from the counter CNT,
- reads from a memory designated the data-profiling memory below the value which is stored at an address assigned to the data memory access address,
- forms the sum of the value read from the data-profiling memory and the counter reading read from the counter CNT, and
- writes the sum back into the data-profiling memory at the address assigned to the data memory access address.

In the example considered, the memory device DUS is used as the data-profiling memory. However, any other desired memory belonging to the determination unit DU or the microcontroller component containing the latter, or any other desired internal memory belonging to the microcontroller, or a memory provided outside the microcontroller, could also be used as the data-profiling memory.

Before the sum is written into the data-profiling memory, a check is preferably made to see whether the sum is greater than the maximum value which can be stored in the data-profiling memory. If, during this check, it transpires that the sum is not greater than the maximum value which can be stored in the data-profiling memory, the sum is written into the data-profiling memory. Otherwise, that is to say when the sum is greater than the maximum value which can be stored in the data-profiling memory, another predetermined value is written into the data-profiling memory, this other predetermined value preferably being the maximum value which can be stored in the data-profiling memory.

It can prove to be advantageous if the actions mentioned above, which have to be carried out at the end of an access to the memory range or the memory ranges for which the data-profiling determination is to be carried out, are not carried out if a memory access carried out again immediately thereafter has just been carried out, such as can be the case when polling, for example.

In a way similar to that in the code-profiling determination described above, it can also prove to be advantageous in the data-profiling determination if reading the value from the data-profiling memory, to which the counter reading from the counter has to be added, and forming the sum and writing the sum back into the data-profiling memory, are only carried out later, and initially only the counter reading from the counter CNT is temporarily stored in a FIFO, together with the data memory access address or together with the address at which the sum is to be stored in the data-profiling memory.

In order to prevent information being lost on account of an inadequately large FIFO, use can also be made here of the FIFO overflow counter already mentioned above.

After the determination unit DU has registered the end of an access to the memory range or the memory ranges for which the data-profiling determination is to be carried out, it monitors the occurrence of a next read access or a next write access to the memory range or the memory ranges for which the data-profiling determination is to be carried out, the processes described above being repeated.

The address at which the data to be written into the data-profiling memory are to be stored in each case is respectively formed by using a mapping algorithm permanently set in the determination unit DU or a mapping algorithm predefined to the determination unit DU by the external control device. In the simplest case, this mapping algorithm consists in a specific offset, for example a specific base address, being added to the data memory access address. It can prove to be advantageous if the data memory access address or the sum of the data memory access address and the offset is shifted right by a specific number of bits, so that one or more of the least significant bits fall out of the address. As a result, although the resolution of the data-profiling determination becomes poorer under certain circumstances, one manages with a considerably smaller data-profiling memory. Additionally or alternatively, in particular when a data-profiling determination is to be carried out for a plurality of memory ranges not located directly beside one another in the address space, it can prove to be advantageous if a mapping algorithm that depends on the data memory access address is used. In particular, it can prove to be advantageous if use is made of a mapping algorithm by means of which the data memory access addresses are assigned addresses which are located directly beside one another (without gaps) in the address space. In this way, the data-profiling memory can be used optimally, more precisely without gaps, so that one manages with a relatively small data-profiling memory.

In the data-profiling determination described above, the times needed for the data accesses were determined. However, provision could also be made for "only" the number of accesses to the data memory access addresses to be determined. This can be done in that, upon each access to a data memory access address, the value which is stored in the data-profiling memory at the address assigned to the relevant data memory access address is incremented. In the case in which polling is carried out, provision could be made for the counter CNT to count the repeated accesses to the data memory access address and, when an access is made to another data memory access address, for the counter reading from the counter CNT to be read and added to the value which is stored in the data-profiling memory at the address assigned to the preceding data memory access address.

The sums stored in the data-profiling memory are read and evaluated by the external control device following the completion of the data-profiling determination.

If the number of instruction cache hits which occur during the execution of the program executed by the microcontroller is to be determined by the determination unit DU, the external control device notifies the determination unit DU of this by transmitting appropriate control information.

The determination unit DU then monitors whether a branch occurs in the program executed by the microcontroller, more precisely by the core of the same. If the determination unit DU detects the execution of a branch, it resets the counter CNT and starts the latter. The counter CNT then counts the number of instruction cache hits. The occurrence of an instruction cache hit is signalled to the determination unit in each case by control signals supplied to it by the core. While the counter CNT counts, the determination unit DU monitors the occurrence of a second branch following the first branch. If the determination unit DU detects the occurrence of a second branch,
- it stops the counter,
- reads the counter reading from the counter CNT,
- from a memory designated the instruction cache hit memory below, it reads the value which is stored at the address assigned to the branch source address of the second branch,
- forms the sum of the value read from the instruction cache hit memory and the counter reading read from the counter CNT, and
- writes the sum into the instruction cache hit memory at the address assigned to the branch source address of the second branch.

In the example considered, the memory device DUS is used as the instruction cache hit memory. However, any other desired memory belonging to the determination unit DU or the microcontroller component containing the latter, or any other desired internal memory belonging to the microcontroller, or a memory provided outside the microcontroller, could also be used as the instruction cache hit memory.

Before the sum is written into the instruction cache hit memory, a check is preferably made to see whether the sum is greater than the maximum value which can be stored in the instruction cache hit memory. If, during this check, it transpires that the sum is not greater than the maximum value which can be stored in the instruction cache hit memory, the sum is written into the instruction cache hit memory. Otherwise, that is to say if the sum is greater than the maximum value which can be stored in the instruction cache hit memory, another predetermined value is written into the instruction cache hit memory, this other predetermined value preferably being the maximum value which can be stored in the instruction cache hit memory.

The sum determined could also be written into the instruction cache hit memory at an address assigned to the branch target address of the first branch. In this case, the sum of the value which is stored in the instruction cache hit memory at the address assigned to the branch target address of the first branch, and of the counter reading read from the counter CNT, and writing this sum into the instruction cache hit memory, would be carried out only if the sum is not greater than the maximum value which can be stored in the instruction cache hit memory.

It can prove to be advantageous if the actions mentioned above, which are to be carried out upon the occurrence of the second branch, are not carried out if a pass through the same program loop, which is subsequently executed again, has just been executed. For example, provision can be made for the aforementioned actions not to be carried out if the branch source address of the second branch is equal to the branch source address of the first branch and, at the same time, the branch target address of the second branch is equal to the branch target address of the first branch.

Furthermore, it can also prove to be advantageous if reading the value from the instruction cache hit memory, to which the counter reading from the counter is to be added, and forming the sum and writing the sum back into the instruction cache hit memory, are not carried out immediately but instead, initially only the counter reading from the counter CNT is stored temporarily in the FIFO DUF, together with the branch source address of the second branch and the branch target address of the first branch, or together with the address at which the sum is to be stored in the instruction cache hit memory. In this case, reading the value from the instruction cache hit memory to which the counter reading from the counter is to be added, and forming the sum and writing the sum back into the instruction cache hit memory, can be carried out at a later time. This proves to be advantageous in particular if the branches follow one another transiently at particularly short time intervals.

In order to prevent information being lost on account of an inadequately large FIFO, a device designated the FIFO overflow counter below can be provided in the determination unit, which device produces data using which, during the subsequent evaluation of the information obtained by the instruction cache hit number determination, it is possible to detect whether and, if appropriate, to what extent the instruction cache hit number determination is or could be incomplete. The FIFO overflow counter used can be, for example, an adding device implemented in hardware, which adds up the counter readings which cannot be stored and processed further in the FIFO because of a lack of free storage locations in the FIFO, or which counts the number of counter readings which cannot be stored and processed further in the FIFO because of a lack of free storage locations in the FIFO.

Immediately after the determination unit DU has read the counter reading from the counter CNT upon the occurrence of the second branch, it resets the counter CNT, starts the counter CNT again and monitors the occurrence of a third branch following the second branch. If the determination unit DU registers the occurrence of a third branch,
- it stops the counter,
- reads the counter reading from the counter CNT,
- reads from the instruction cache hit memory the value which is stored at an address assigned to the branch source address of the third branch,
- forms the sum of the value read from the instruction cache hit memory and the counter reading read from the counter CNT, and
- writes the sum into the instruction cache hit memory at the address assigned to the branch source address of the third branch.
That is to say, the second branch is treated in the same way as the first branch, and the third branch is treated in the same way as the second branch.

The procedure is the same upon the occurrence of further branches.

The address at which the sum is stored in each case, that is to say the address assigned to the branch target address of the first branch or the address assigned to the branch source address of the second branch, is in each case formed by using a mapping algorithm permanently set in the determination unit DU or a mapping algorithm predefined to the determination unit DU by the external control device. In the simplest case, this mapping algorithm consists in a specific offset, for example a specific base address, being added to the branch target address of the first branch or to the branch source address of the second branch. It can prove to be advantageous if the branch target address of the first branch or the branch source address of the second branch, or the sum of this address and the offset, is shifted right by a specific number of bits, so that one or more of the least significant bits fall out of the address. As a result, although the resolution of the instruction cache hit number determination becomes poorer under certain circumstances, one manages with a considerably smaller instruction cache hit memory for this purpose.

The sums stored in the instruction cache hit memory are read and evaluated by the external control device following the completion of the instruction cache hit number determination.

If the number of data cache hints is to be determined by the determination unit DU, the procedure is the same as in the instruction cache hit number determination described above. The only difference is that, in the case of data cache hit number determination, the number of data cache hits is counted by the counter CNT; the occurrence of data cache hits can be signalled to the determination unit DU in each case by means of control signals supplied to it by the core.

In addition, if the number of instruction cache misses or the number of data cache misses is to be determined by the determination unit DU, the procedure is the same as in the instruction cache hit number determination described above. The only difference is that, in the case of instruction cache miss number determination, the number of instruction cache misses is counted by the counter CNT and, in the case of the data cache miss number determination, the number of data cache misses is counted by the counter CNT. The occurrence of instruction cache misses or the occurrence of data cache misses can be signalled to the determination unit DU in each case by means of control signals supplied to it by the core.

The same is true of the case in which the determination unit DU is to determine the number of program interruptions caused by exceptions. In this case, too, the procedure can be the same as in the instruction cache hit number determination described above. The difference is only that, in the program interruption number determination, the number of program interruptions is counted by the counter CNT; the occurrence of program interruptions can be signalled to the determination unit DU in each case by means of control signals supplied to it by the core.

The latency time following the occurrence of an instruction cache miss can also be determined by the determination unit DU.

If a latency time determination is to be carried out by the determination unit DU, the external control device notifies the determination unit DU of this by means of transmitting appropriate control information.

The determination unit DU then monitors whether a branch occurs in the program executed by the microcontroller, more precisely by the core of the same. If the determination unit DU detects the execution of a branch,
- it resets the counter CNT,
- it monitors the occurrence of a second branch following the first branch, and
- at the same time it monitors the occurrence of an instruction cache miss.

The occurrence of an instruction cache miss is signalled to the determination unit in each case by means of control signals supplied to it by the core.

When the determination unit DU detects the occurrence of an instruction cache miss, it starts the counter CNT. The counter CNT then counts the clock cycles of a clock signal at a constant and known frequency, so that the counter reading is a value which represents the time which has elapsed since the last instruction cache miss. While the counter counts, the determination unit DU monitors the occurrence of the end of the latency time following the instruction cache miss. In the example considered, the latency time is viewed as completed when the execution of the next command is started. When the execution of an appropriate command is started, the determination unit DU is in each case signalled by means of control signals supplied to it by the core. When the determination unit detects the occurrence of the end of the latency time to be determined, it stops the counter.

The determination unit then monitors the occurrence of further instruction cache misses and the occurrence of the respective end of the latency times which follow, the determination unit
- starting the counter CNT each time it detects the occurrence of an instruction cache miss, and
- stopping the counter CNT each time it detects the occurrence of the end of the latency time to be determined.

When the determination unit DU detects the occurrence of a second branch following the first branch,
- it reads the counter reading from the counter CNT,
- reads from a memory designated the latency time memory below the value which is stored at an address assigned to the branch source address of the second branch,
- forms the sum of the value read from the latency time memory and the counter reading read from the counter CNT, and
- writes the sum into the latency time memory at the address assigned to the branch source address of the second branch.

In the example considered, the memory device DUS is used as the latency time memory. However, any other desired memory belonging to the determination unit DU or the microcontroller component containing the latter, or any other desired internal memory belonging to the microcontroller, or a memory provided outside the microcontroller, could also be used as the latency time memory.

Before the sum is written into the latency time memory, a check is preferably made to see whether the sum is greater than the maximum value which can be stored in the latency time memory. If, during this check, it transpires that the sum is not greater than the maximum value which can be stored in the latency time memory, the sum is written into the latency time memory. Otherwise, that is to say if the sum is greater than the maximum value which can be stored in the latency time memory, another predetermined value is written into the latency time memory, this other predetermined value preferably being the maximum value which can be stored in the latency time memory.

The sum determined could also be written into the latency time memory at an address assigned to the branch target address of the first branch. In this case, the sum of the value which is stored in the latency time memory at the address assigned to the branch target address of the first branch and the counter reading read from the counter CNT would be formed and this sum would be written into the latency time the memory only if the sum is not greater than the maximum value which can be stored in the latency time memory.

It can prove to be advantageous if the actions mentioned above, which are to be carried out upon the occurrence of the second branch, are not carried out if a pass through the same program loop, which is subsequently executed again, has just been executed. For example, provision can be made for the aforementioned actions not to be carried out if the branch source address of the second branch is equal to the branch source address of the first branch and, at the same time, the branch target address of the second branch is equal to the branch target address of the first branch.

Furthermore, it can also prove to be advantageous if reading the value from the latency time memory, to which the counter reading from the counter is to be added, and forming the sum and writing the sum back into the latency time memory, are not carried out immediately but instead, initially only the counter reading from the counter CNT is stored temporarily in a FIFO DUF, together with the branch source address of the second branch and the branch target address of the first branch, or together with the address at which the sum is to be stored in the latency time memory. In this case, reading the value from the latency time memory to which the counter reading from the counter is to be added, and forming the sum and writing the sum back into the latency time memory, can be carried out at a later time. This proves to be advantageous in particular if the branches follow one another transiently at particularly short time intervals.

In order to prevent information being lost on account of an inadequately large FIFO, a device designated the FIFO overflow counter below can be provided in the determination unit, which device produces data using which, during the subsequent evaluation of the information obtained by the latency time determination, it is possible to detect whether and, if appropriate, to what extent the latency time determination is or could be incomplete. The FIFO overflow counter used can be, for example, an adding device implemented in hardware, which adds up the counter readings which cannot be stored and processed further in the FIFO because of a lack of free storage locations in the FIFO, or which counts the number of counter readings which cannot be stored and processed further in the FIFO because of a lack of free storage locations in the FIFO.

Immediately after the determination unit DU has read the counter reading from the counter CNT upon the occurrence of the second branch,
- it resets the counter CNT,
- monitors the occurrence of a third branch following the second branch, and
- at the same time monitors the occurrence of further instruction cache misses,
the processes described above being repeated, specifically such that the second branch is treated in the same way as the first branch and the third branch is treated in the same way as the second branch.

The address at which the sum is in each case stored, that is to say the address assigned to the branch target address of the first branch or the address assigned to the branch source address of the second branch, is respectively formed by using a mapping algorithm permanently set in the determination unit DU or a mapping algorithm predefined to the determination unit DU by the external control device. In the simplest case, this mapping algorithm consists in a specific offset, for example a specific base address, being added to the branch target address of the first branch or to the branch source address of the second branch. It can prove to be advantageous if the branch target address of the first branch or the branch source address of the second branch, or the sum of this address and the offset is shifted right by a specific number of bits, so that one or more of the least significant bits fall out of the address. As a result, although the resolution of the latency time determination becomes poorer under certain circumstances, one manages with a considerably smaller latency time memory.

The sums stored in the latency time memory are read and evaluated by the external control device following the completion of the latency time determination.

The latency times which result after data cache misses occur can also be determined and stored in a corresponding manner.

Given appropriate construction of the determination unit, a plurality of the determinations described above can also be carried out simultaneously.

In all the determinations explained above, it can prove to be advantageous if, during the determination of the information of interest, only selected processes are taken into account, more precisely only those processes which occur during the execution of a specific program part and/or which occur during access to selected data memory ranges. In the above description of the data-coverage determination and the data-profiling determination, it has already been mentioned that it can prove to be advantageous if only accesses to selected data memory ranges are taken into account. A restriction of this type of the processes to be taken into account during the determination can also prove to be advantageous in the determination of other information, in particular in the data cache hit number determination, the data cache miss number determination and the latency time determination. Additionally or alternatively, provision can be made to take into account only processes which occur during the execution of selected program parts. The latter applies to all the determinations described above and can, for example, be implemented by the external control device transmitting to the determination unit information about the program parts to be taken into account in the determination respectively to be carried out. In this case, for example, provision can be made for the external control device to transmit the instruction pointer values or an instruction pointer value range, and for the determination unit, when determining the information to be determined by it, to take into account only those processes which take place during the execution of instructions whose instruction pointer values correspond to the instruction pointer values supplied to the determination unit by the external control device or lie within the instruction pointer value range supplied to the determination unit by the external control device. The aforementioned measures make it possible to limit the amount of information produced overall and to be stored and, consequently, also the size of the memory to be provided for storing this information.

In all the determinations described above in which a sum of counter readings from the counter CNT is determined and stored, that is to say in the code-profiling determination, the data-profiling determination, the cache hit number determination, the cache miss number determination, the program interruption number determination and the latency time determination, it can prove to be advantageous if, in addition to the sum, in each case the number of counter readings by summing which the respective sum was formed is also stored. As a result, with relatively little outlay, more precise information about the processes running in the microcontroller can be obtained. More precisely, during the subsequent evaluation of the data produced and stored during the determination, average values can be determined as a result, that is to say, for example
- the average time which is needed for the execution of a command, or
- the average number of cache hits or cache misses which occur during the running of a program part between two branches, or
- the average latency time after a cache miss.

In all the determinations described above in which, according to the above description, a sum of counter readings from the counter CNT is determined and stored, that is to say in the code-profiling determination, the data-profiling determination, the cache hit number determination, the cache miss number determination, the program interruption number determination and the latency time determination, it can prove to be advantageous if it is not the sum of the counter readings which is determined and stored but the largest or the smallest counter reading from the counter. In this case, the counter reading read from the counter CNT would be compared with the value to which the counter reading was added in accordance with the above description and
- the relevant value would be overwritten by the counter reading read from the counter,
   - if the counter reading read from the counter is greater than the relevant value (in the case of a maximum value determination), or
   - if the counter reading read from the counter is less than the relevant value (in the case of a minimum value determination), and
- the relevant value would be left unchanged,
   - if the counter reading read from the counter is not greater than the relevant value (in the case of a maximum value determination), or
   - if the counter reading read from the counter is not less than the relevant value (in the case of a minimum value determination).

In particular in the determinations in which a time is determined, that is to say in the code-profiling determination, the data-profiling determination and, above all, in the latency time determination, it can prove to be advantageous if the sum of the time durations of processes occurring between two branches is not determined and stored as described above, but instead the time duration of each individual process is determined separately and is stored together with the instruction pointer value of the instruction during the execution of which the process whose duration is to be determined has occurred. Thus, individual items of information about the processes of interest can be obtained by the determination unit DU in a relatively simple manner.

The same applies to the determinations by means of which it is determined how often a specific process occurs, that is to say in the cache hit number determination and cache miss number determination. In this case, more accurate individual items of information can be obtained by
- the counter readings read not being added to the counter readings already read but being stored together with the branch source address of the second branch or the branch target address of the first branch, or
- each time a process occurs whose occurrence is to be monitored, the instruction pointer value of the current instruction being stored (possibly together with an item of information representing the occurrence of the relevant process).

A multi-stage determination of the information of interest proves to be particularly advantageous. For example, provision can be made
- that, first of all, a relatively coarse determination of the information of interest is carried out, more precisely the determination of an item of overall information and/or the determination of an item of average information is carried out, and
- that, subsequently, for selected processes, a more accurate determination of the information of interest is carried out, more precisely the determination of less highly combined information, for example the determination of individual items of information about the respective processes.

In the manner described, irrespective of the details of the practical implementation, an extremely wide range of information can be determined with little effort about processes which run in a program-controlled unit during the execution of a program by the program-controlled unit.

### List of reference symbols

- BUSx: Bus
- C: Core
- CNT: Counter
- CTRL: Control device
- DU: Determination unit
- DUF: Buffer
- DUS: Memory device
- Px: Peripheral unit
- Sx: Memory device

## Claims

1. Method of determining information about the processes which run in a program-controlled unit during the execution of a program by the program-controlled unit, **characterized in that** identical individual items of information about processes of the same type are combined to form a single item of overall information.

2. Method according to Claim 1, **characterized in that** the item of overall information is formed by summing individual items of information.

3. Method according to Claim 1, **characterized in that** the formation of the item of overall information is carried out by summing individual items of information about processes which occur during the execution of a program part executed between two successive branches.

4. Method according to Claim 3, **characterized in that** the formation of the item of overall information is carried out by summing the items of overall information according to Claim 3.

5. Method according to Claim 4, **characterized in that** only items of overall information about such processes which occur during repeated executions of the same program part are summed.

6. Method according to Claim 2, **characterized in that**, as individual items of information, use is made of values which represent the time durations of the processes to be taken into account.

7. Method according to Claim 6, **characterized in that**, as an individual item of information, use is made of a value which represents the time duration needed for the execution of a command.

8. Method according to Claim 6, **characterized in that**, as an individual item of information, use is made of a value which represents the time duration needed for fetching data from a memory.

9. Method according to Claim 6, **characterized in that**, as an individual item of information, use is made of the latency time following a cache miss.

10. Method according to Claim 2, **characterized in that**, as an individual item of information, use is made of the occurrence of a process to be taken into account.

11. Method according to Claim 10, **characterized in that**, as an individual item of information, use is made of the occurrence of a cache hit.

12. Method according to Claim 10, **characterized in that**, as an individual item of information, use is made of the occurrence of a cache miss.

13. Method according to Claim 10, **characterized in that**, as an individual item of information, use is made of the occurrence of a program interruption caused by an exception.

14. Method according to Claim 2, **characterized in that** the sum is formed by a counter.

15. Method according to Claim 2, **characterized in that** the sum is formed by an addition.

16. Method according to Claim 1, **characterized in that** the item of overall information corresponds to the difference between individual items of information about selected processes.

17. Method according to Claim 16, **characterized in that** the individual items of information are the instruction pointer values of program commands executed by the program-controlled unit.

18. Method according to Claim 16, **characterized in that** the item of overall information is formed by subtracting the branch target address of a first branch and the branch source address of a second branch following the first branch.

19. Method according to Claim 1, **characterized in that** the method is used for code-coverage determination.

20. Method according to Claim 1, **characterized in that** the method is used for code-profiling determination.

21. Method according to Claim 1, **characterized in that** the method is used for data-coverage determination.

22. Method according to Claim 1, **characterized in that** the method is used for data-profiling determination.

23. Method according to Claim 1, **characterized in that** the method is used for cache hit number determination.

24. Method according to Claim 1, **characterized in that** the method is used for cache miss number determination.

25. Method according to Claim 1, **characterized in that** the method is used for determining the latency times after cache misses.

26. Method according to Claim 1, **characterized in that** the method is used for determining the number of program interruptions caused by exceptions.

27. Method according to Claim 1, **characterized in that** the method is carried out by a determination unit provided in the program-controlled unit.

28. Method according to Claim 27, **characterized in that** an on-chip debug support module of the program-controlled unit is used as the determination unit.

29. Method according to Claim 27, **characterized in that** the determination unit is a constituent part of an on-chip debug support module of the program-controlled unit.

30. Method according to Claim 27, **characterized in that** the determination unit is controlled by a control device provided outside the program-controlled unit.

31. Method according to Claim 30, **characterized in that** the control unit provided outside the program-controlled unit notifies the determination unit about which information the determination unit is to determine, by means of transmitting appropriate control signals.

32. Method according to Claim 30, **characterized in that** the control unit provided outside the program-controlled unit notifies the determination unit about which processes are to be taken into account in determining the information to be determined, by transmitting appropriate control signals.

33. Method according to Claim 30, **characterized in that** the control unit provided outside the program-controlled unit notifies the determination unit about where the information determined is to be stored, by transmitting appropriate control signals.

34. Method according to Claim 33, **characterized in that** the control unit provided outside the program-controlled unit transmits to the determination unit a mapping algorithm, using which the determination unit can determine the addresses at which the information determined by the determination unit is to be stored.

35. Method according to Claim 27, **characterized in that** the information determined by the determination unit is stored in a memory provided inside the program-controlled unit.

36. Method according to Claim 35, **characterized in that** the memory used is a memory of an on-chip debug support module of the program-controlled unit.

37. Method according to Claim 33 in conjunction with Claim 3, **characterized in that** the address at which the information determined by the determination unit is stored is an address assigned to the branch source address of the second branch or an address assigned to the branch target address of the first branch.

38. Method according to Claim 37, **characterized in that** the address assigned to the branch source address of the second branch or the address assigned to the branch target address of the first branch is formed by adding an offset to the branch source address of the second branch or to the branch target address of the first branch.

39. Method according to Claim 38, **characterized in that** the branch source address of the second branch or the branch target address of the first branch before the addition of the offset, or the sum of this address and of the offset, is shifted right by one or more bits, so that one or more of the least significant bits fall out of the address.

40. Method according to Claim 38, **characterized in that** use is made of an offset which depends on the branch source address of the second branch or on the branch target address of the first branch.

41. Method according to Claim 4, **characterized in that** the item of overall information is stored together with the number of executions of the program part executed between the two branches.

42. Method according to Claim 4, **characterized in that** the item of overall information formed in accordance with Claim 3 is written into a buffer, and the formation and storage of the item of overall information according to Claim 4 are carried out only at a later time.

43. Method according to Claim 3, **characterized in that** the item of overall information is stored only when the value representing this is greater than the value which is stored at the address at which the item of overall information is to be stored.

44. Method according to Claim 3, **characterized in that** the item of overall information is stored only when the value representing this is less than the value which is stored at the address at which the item of overall information is to be stored.

45. Method according to Claim 2, **characterized in that** the item of overall information is stored only when the value representing this is not greater than the maximum value which can be stored in the memory used for storing the item of overall information.

46. Method according to Claim 45, **characterized in that**, when the value representing the item of overall information is greater than the maximum value which can be stored in the memory used for storing the item of overall information, another predetermined value is stored.

47. Method according to Claim 16, **characterized in that** the difference is stored only when it is greater than the value which is stored at the address at which the difference is to be stored.

48. Method according to Claim 42, **characterized in that** the difference is initially written into a buffer and the check as to whether storage is to be carried out, and the storage which may possibly be carried out, are carried out only at a later time.

49. Method according to Claim 42 or 48, **characterized in that**, when information to be written into the buffer cannot be written into the buffer because of a lack of free storage locations in the buffer, the information which cannot be written into the buffer is added or counted by an overflow counter.

50. Method according to Claim 1, **characterized in that**, following the determination and storage of the items of overall information, selected individual items of information are determined and stored in a further method step.
